Europäisches Patentamt

European Patent Office

Office européen des brevets

(11) Veröffentlichungsnummer: **0 209 647**
**A1**

(12) **EUROPÄISCHE PATENTANMELDUNG**

(21) Anmeldenummer: 86105667.9

(22) Anmeldetag: 24.04.86

(51) Int. Cl.⁴: **F 16 K 27/06**
**F 16 L 25/02**

(30) Priorität: 30.05.85 DE 3519273

(43) Veröffentlichungstag der Anmeldung:
28.01.87 Patentblatt 87/5

(84) Benannte Vertragsstaaten:
AT BE CH DE FR GB IT LI LU NL SE

(71) Anmelder: MANIBS R. Mannesmann GmbH & ibs Nagel
GmbH & Co. KG.
Lempstrasse 24
D-5630 Remscheid-Bliedinghausen(DE)

(72) Erfinder: Servé, Klaus
Elberfelder Strasse 39
D-5608 Radevormwald(DE)

(74) Vertreter: Mentzel, Norbert, Dipl.-Phys. et al,
Patentanwälte Dipl.-Phys. Buse Dipl.-Phys. Mentzel
Dipl.-Ing. Ludewig Unterdörnen 114
D-5600 Wuppertal 2(DE)

(54) **Absperrhahn.**

(57) Absperrhahn für eine als Hausanschluß dienende Druckrohrleitung, bestehend aus einem metallischen Gehäuse (10), welches ein mit einer außerhalb des Gehäuses (10) angeordneten Handhabe (14) betätigbares Absperrorgan (11) aufnimmt und beidendig metallische Rohrstutzen (19, 26) für den Anschluß der Zuleitung und der Ableitung aufweist, wobei der eine der beiden Anschlußrohrstutzen (19, 26) in einer einseitigen, rohrförmigen Verlängerung (29) des Gehäuses (10) gehaltert und zwischen dem metallischen Anschlußrohrstutzen (26) und der metallischen Gehäuseverlängerung (29) eine zugleich der Befestigung des Anschlußrohrstutzens (26) in der Gehäuseverlängerung dienende Zwischenlage (36) aus elektrisch isolierendem Material vorgesehen ist, die aus einer auf dem eingeschobenen Anschlußrohrstutzen (26) aufgesprühten Schicht aus Aluminiumoxid besteht, und mit Epoxydharz vakuumimprägniert ist.

FIG. 2

**PATENTANWÄLTE**
zugelassene Vertreter beim Europäischen Patentamt

**0209647**

**DIPL.-PHYS. BUSE · DIPL.-PHYS. MENTZEL · DIPL.-ING. LUDEWIG**
Unterdörnen 114 · Postfach 200210 · 5600 Wuppertal 2 · Fernruf (0202) 55 70 22/23/24 · Telex 8 591 606 wpat

77                    — 1 —          5600 Wuppertal 2, den

<u>Kennwort:</u> Wärmeisolierter Absperrhahn"

MANIBS R. Mannesmann GmbH + ibs Nagel GmbH & Co. KG,
Lempstraße 24, 5630 Remscheid-Bliedinghausen

_____

Absperrhahn

_____

Die Erfindung betrifft einen Absperrhahn für eine als Hausanschluß dienende Druckrohrleitung, bestehend aus einem metallischen Gehäuse, welches ein mit einer außerhalb des Gehäuses angeordneten Handhabe betätigbares Absperrorgan aufnimmt und beidendig metallische Rohrstutzen für den Anschluß der Zuleitung und der Ableitung aufweist, wobei der eine der beiden Anschlußrohrstutzen in einer einseitigen, rohrförmigen Verlängerung des Gehäuses gehaltert und zwischen dem metallischen Anschlußrohrstutzen und der metallischen Gehäuseverlängerung eine zugleich der Befestigung des Anschlußrohrstutzens in der Gehäuseverlängerung dienende Zwischenlage aus elektrisch isolierendem Material vorgesehen ist.

Mit diesem aus der DE-OS 33 39 545 bekannten Absperrhahn kann die als Hausanschluß dienende Druckrohrleitung abgesperrt werden. Mit der Zwischenlage aus elektrisch isolierendem Material ist die elektrische Verbindung zwischen der Zuleitung und der Ableitung des Absperrhahnes zuverlässig unterbrochen, so daß keine Induktionsströme und/oder Kriechströme aus dem Versorgungsrohr in die Hausleitungen gelangen können. Die Zwischenlage aus elektrisch isolierendem Material dient dabei zugleich der Halterung des isoliert gehalterten Anschlußrohrstutzens in der Gehäuseverlängerung des Absperrhahnes. Da die Zwischenlage aus elektrisch isolierendem Material aus einem Dichtungsring aus weichelastischem Material, wie Gummi, Kunststoff od.dgl., aus einem Isolierring aus Phenoplast-Schichtstoffen und einer elektrisch isolierenden Vergußmasse besteht, weist dieser Absperrhahn jedoch nicht die nunmehr geforderte Standzeit von einer 1/2 Stunde für eine Erwärmung auf 650°C auf.

Der Erfindung liegt die Aufgabe zugrunde, einen Absperrhahn für eine als Hausanschluß dienende Druckrohrleitung der eingangs erläuterten Art zu schaffen, bei dem die Zwischenlage aus elektrisch isolierendem Material auch eine Standzeit von einer 1/2 Stunde für eine Erwärmung auf 650°C aushält.

Diese Aufgabe ist erfindungsgemäß dadurch gelöst, daß die Zwischenlage aus elektrisch isolierendem Material aus einer auf den eingeschobenen Anschlußrohrstutzen aufgesprühten Schicht aus Aluminiumoxid besteht, die mit Epoxydharz vakuumimprägniert ist. Diese aufgesprühte und mit Epoxydharz vakuumimprägnierte Schicht aus Aluminiumoxid weist den erforderlichen elektrischen Widerstand auf, um einer Spannung bis zu 4000 Volt zu widerstehen. Außerdem ist diese Schicht gegenüber einer Erwärmung auf 650°C unempfindlich, so daß die geforderte Standzeit von einer 1/2 Stunde ohne Schwierigkeiten eingehalten werden kann.

Die auf dem eingeschobenen Anschlußrohrstutzen aufgesprühte und mit Epoxydharz vakuumimprägnierte Schicht aus Aluminiumoxid kann eine Dicke von bis zu 2 mm aufweisen. Diese Dicke der Schicht reicht aus, um die erforderliche Isolierung gegenüber Strom zu gewährleisten und Überschlagstrecken entsprechend groß zu halten.

Die auf den eingeschobenen Anschlußrohrstutzen aufgesprühte und mit Epoxydharz vakuumimprägnierte Schicht aus Aluminiumoxid kann mit geschliffenen Anlageflächen versehen und der mit dieser Schicht versehene Anschlußrohrstutzen in der Gehäuseverlängerung eingeschrumpft sein. Die auf dem eingeschobenen Anschlußrohrstutzen aufgesprühte und mit Epoxydharz vakuumimprägnierte Schicht aus Aluminiumoxid weist eine große Härte auf, so daß zur Schaffung der erforderlichen Anlageflächen für die Anlage an die Anlageflächen der Gehäuseverlängerung ein Schleifen mit einer Diamant-Schleifscheibe erforderlich ist. Zur Erzielung einer dichten Anlage der geschliffenen Anlageflächen gegen die entsprechenden Anlageflächen der Gehäuseverlängerung ist die Gehäuseverlängerung aufgeschrumpft.

Die innere Mantelfläche der Gehäuseverlängerung, die mit Preßsitz auf der äußeren Mantelfläche der Isolierschicht aufsitzt, und die die Isolierschicht aufweisende äußere Mantelfläche des Anschlußrohrstutzens können konisch zum Einsteckende des Anschlußrohrstutzens zunehmen. Durch diese konische Ausbildung der inneren Mantelfläche der Gehäuseverlängerung, die mit Preßsitz auf der äußeren Mantelfläche der Isolierschicht aufsitzt und durch die konische Ausbildung der die Isolierschicht aufweisende äußere Mantelfläche des Anschlußrohrstutzens ist eine formschlüssige Verbindung geschaffen, so daß ein Herausziehen des Anschlußrohrstutzens aus der Gehäuseverlängerung selbst bei hohen Belastungen nicht zu befürchten ist.

Auf der Zeichnung ist die Erfindung in zwei Ausführungsbeispielen dargestellt, und zwar zeigen:

Fig. 1 einen erfindungsgemäßen Absperrhahn mit Anschlußrohrstutzen, die zum Anschweißen der Zuleitung und der Ableitung dienen, im Längsschnitt, und

Fig. 2 einen Absperrhahn, bei dem die Anschlußrohrstutzen zum Einschrauben der Zuleitung und der Ableitung dienen, im Längsschnitt.

Der auf der Zeichnung dargestellte Absperrhahn für eine als Hausanschluß dienende Druckrohrleitung besteht aus einem metallischen, rohrförmigen Gehäuse 10, welches ein kugelförmiges Absperrorgan 11 aufnimmt. Das kugelförmige Absperrorgan 11 ist drehbar in dem rohrförmigen Gehäuse 10 gelagert und weist eine Ausnehmung 12 auf, in die eine Drehachse 13 formschlüssig eingreift. Die Drehachse 13 durchgreift das metallische Gehäuse und weist an ihrem freien Ende eine Betätigungshandhabe 14 auf. Mit der Betätigungshandhabe 14 kann somit das kugelförmige Absperrorgan 11 aus der in den Fig. dargestellten Offenstellung um 90° gedreht und somit in die Sperrstellung überführt werden.

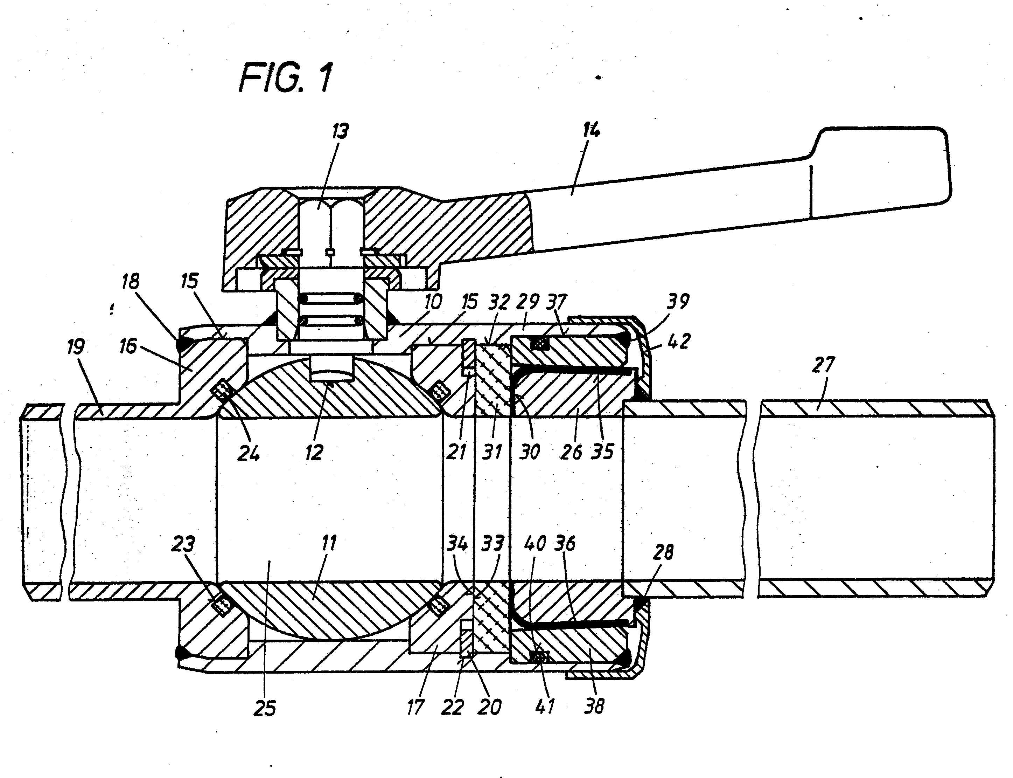

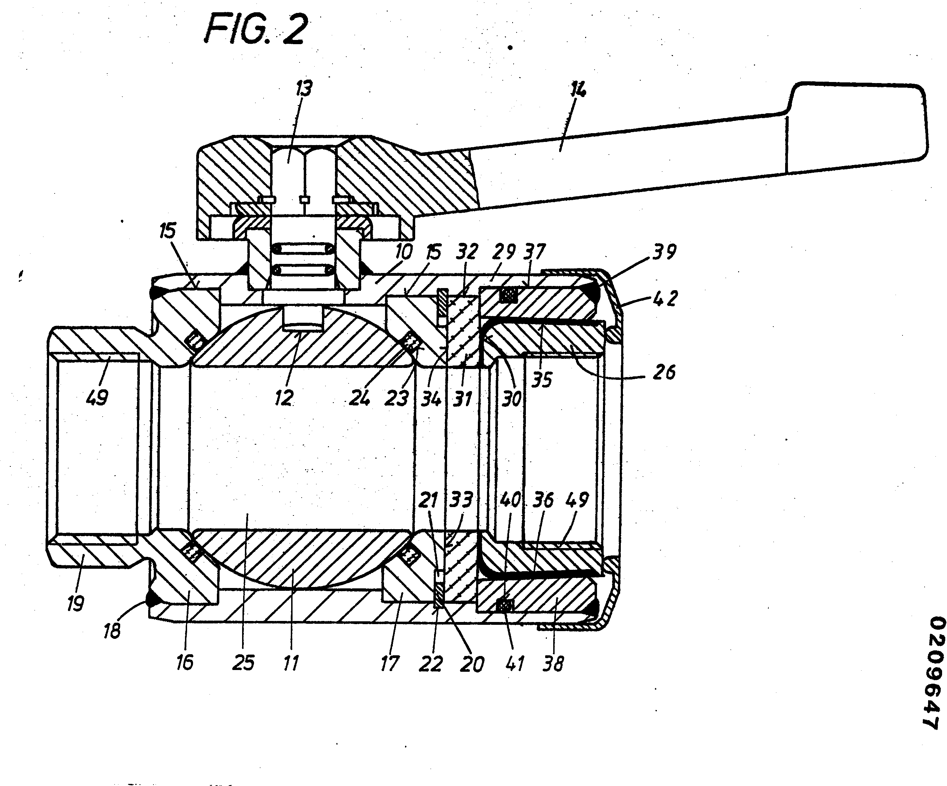

Das rohrförmige Gehäuse 10 weist an seinen beiden Enden durchmesservergrößerte Ausnehmungen 15 auf, in denen Ringscheiben 16, 17 eingesetzt sind. Die Ringscheibe 16 ist dabei mit einer Schweißnaht 18 in der Ausnehmung 15 des rohrförmigen Gehäuses 10 gehaltert und weist einen angeformten Rohrstutzen 19 auf, der bei dem in der Fig. 1 dargestellten Ausführungsbeispiel zum Anschweißen an die nicht näher dargestellte Zuleitung dient. Bei dem in Fig. 2 dargestellten Ausführungsbeispiel weist der Rohrstutzen 19 ein Innengewinde 49 zum Einschrauben der nicht näher dargestellten Zuleitung auf.

Die zweite Ringscheibe 17 ist mit einem Sprengring 20 in der Ausnehmung 15 des rohrförmigen Gehäuses 10 gehaltert, wobei der Sprengring in einer Ausnehmung 21 der Ringscheibe 17 angeordnet ist und in eine umlaufende Nut 22 des rohrförmigen Gehäuses 10 eingreift.

Die beiden Ringscheiben 16 und 17 sind an den Stirnflächen, die dem kugelförmigen Absperrorgan 11 zugekehrt sind, kalottenförmig ausgebildet und liegen so dem kugelförmigen Absperrorgan 11 dicht an. In den Anlageflächen der Ringscheiben 16, 17 sind dabei umlaufende Nuten 23 für die Aufnahme von Dichtungsringen 24 vorgesehen. Die beiden Ringscheiben 16, 17 liegen somit abgedichtet an dem kugelförmigen Absperrorgan 11 an. Das kugelförmige Absperrorgan 11 ist mit einem Durchbruch 25 versehen, der in der Offenstellung des kugelförmigen Absperrorgans 11, die in den Fig. dargestellt ist, gleichachsig zum Rohrstutzen 19 verläuft. Zum Absperren wird das kugelförmige Absperrorgan 11 um 90° um die Drehachse 13 gedreht, so daß der Durchbruch 25 rechtwinklig zum Rohrstutzen 19 angeordnet ist.

Für den Anschluß der Ableitung ist ein Anschlußrohrstutzen 26 vorgesehen. Bei dem in der Fig. 1 dargestellten Ausführungsbeispiel ist an dem Anschlußrohrstutzen 26 eine Ableitungsrohrleitung 27 mit der Schweißnaht 28 befestigt, während bei dem in der Fig. 2 dargestellten zweiten Ausführungsbeispiel der Anschlußrohrstutzen 26 mit einem Innengewinde 49 zum Anschluß einer nicht näher dargestellten Ableitung versehen ist.

Der Rohrstutzen 26 ist in einer Verlängerung 29 des rohrförmigen Gehäuses 10 befestigt, wobei der Rohrstutzen 26 gleichachsig zum Rohrstutzen 19 verläuft. Der isoliert gehalterte Anschlußrohrstutzen 26 liegt mit seiner dem anderen Rohrstutzen 19 zugekehrten freien Stirnfläche 30 gegen einen Dichtungsring 31 aus weichelastischem Material, wie Gummi, Kunststoff od.dgl. an. Der Dichtungsring 31 stützt sich dabei mit seiner äußeren Mantelfläche gegen die innere Mantelfläche 32 der in der Gehäuseverlängerung 29 vorgesehenen Aufnahme 15 und mit der dem isoliert gehalterten Anschlußrohrstutzen 26 abgekehrten Stirnfläche 33 gegen die von der Ringscheibe 17 gebildeten Ringschulter 34 ab.

Der Anschlußrohrstutzen 26 ist an seiner dem anderen Rohrstutzen 19 zugekehrten freien Stirnfläche 30 und auf dem größten Teil seiner äußeren Mantelfläche mit einer Isolierschicht 36 versehen. Diese Isolierschicht aus elektrisch isolierendem Material besteht aus einer aufgesprühten Schicht aus Aluminiumoxid, die mit Epoxydharz vakuumimprägniert ist. Diese Isolierschicht kann dabei eine Dicke von bis zu 2 mm aufweisen. Durch das Aufsprühen von Aluminiumoxid und dem Vakuumimprägnieren mit Epoxydharz weist die Isolierschicht 36 zunächst eine rauhe unregelmäßige Oberfläche auf. Vor der Montage muß daher die Isolierschicht 36 außenseitig mit einer Diamant-Schleifscheibe geschliffen werden.

Bei der Montage des Absperrhahnes wird der Anschlußrohrstutzen 26 in die Gehäuseverlängerung 29 eingeschrumpft. Hierzu ist in einer erweiterten Ausnehmung 37 der Gehäuseverlängerung 29 noch eine metallische Hülse 38 eingesetzt und mit einer Schweißnaht 39 befestigt. In der äußeren Mantelfläche der metallischen Hülse 38 ist eine umlaufende Nut 40 vorgesehen, in der ein Dichtungsring 41 eingesetzt ist.

Die innere Mantelfläche der in der Gehäuseverlängerung 29 eingesetzten Hülse 38, die mit Preßsitz auf der äußeren Mantelfläche der Isolierschicht 36 aufsitzt, und die die Isolierschicht 36 aufweisende äußere Mantelfläche 35 des Anschlußrohrstutzens 26 verlaufen schwach konisch und nehmen zum Einsteckende des Anschlußrohrstutzens 26 zu. Bei der Montage wird der Anschlußrohrstutzen 26 mit der aufsitzenden Isolierschicht 36 auf etwa -50°C abgekühlt, während die metallische Hülse 38 auf etwa 250°C erhitzt wird. Danach wird die Hülse 38 auf den Anschlußrohrstutzen 26 in Richtung der Konizität aufgepreßt. Durch das Abkühlen der metallischen Hülse und dem Erwärmen des Anschlußrohrstutzens wird die metallische Hülse 38 mit Preßsitz auf den Anschlußrohrstutzen 26 aufgeschrumpft. Danach wird die metallische Hülse 38 mit dem einsitzenden Anschlußrohrstutzen 26 in die erweiterte Ausnehmung 37 der Gehäuseverlängerung 29 eingeschoben und mit der Schweißnaht 39 befestigt.

Da der Anschlußrohrstutzen 26 in die metallische Hülse 38 eingeschrumpft ist, und wegen der konischen Anlageflächen, ist ein Herausziehen des Anschlußrohrstutzens 26 aus der metallischen Hülse 38 wegen des Formschlusses nicht zu befürchten, selbst wenn große Kräfte auf den Anschlußrohrstutzen 26 einwirken.

Die auf dem eingeschobenen Anschlußrohrstutzen aufgesprühte und mit Epoxydharz vakuumimprägnierte Schicht aus Aluminiumoxid ist ein gutes Dielektrikum, so daß selbst eine Spannung von etwa 4000 V nicht durchkommt. Weiterhin ist diese Isolierschicht wärmebeständig, so daß die Isolierschicht 36 eine Erwärmung auf 650°C über eine 1/2 Stunde aushält. Die Dichtheit des Absperrhahnes ist somit zuverlässig gewährleistet, selbst wenn bei einer Erwärmung des Absperrhahnes der Dichtungsring 31 beschädigt werden sollte.

Auf dem freien Ende der Gehäuseverlängerung 29 ist eine aus Kunststoff bestehende, ringsförmige Abdeckkappe 42 aufgesetzt, die eine elektrisch leitende Verbindung durch nasse Erde od.dgl. zwischen dem Anschlußrohrstutzen 26 und dem rohrförmigen Gehäuse 10 verhindert.

Wie bereits erwähnt, sind die dargestellten Ausführungen lediglich beispielsweise Verwirklichungen der Erfindung und diese nicht darauf beschränkt. Vielmehr sind noch mancherlei andere Ausführungen und Abänderungen möglich. So könnte die Zuleitung auch an dem Anschlußrohrstutzen 26 und die Ableitung an dem Anschlußrohrstutzen 19 angebracht werden. Weiterhin ist es auch möglich, jeweils einen der beiden Rohrstutzen 19, 26 als Schweißstutzen und den anderen Anschlußrohrstutzen 26, 19 als Schraubstutzen auszubilden.

**PATENTANWÄLTE**
zugelassene Vertreter beim Europäischen Patentamt

**0209647**

**DIPL.-PHYS. BUSE · DIPL.-PHYS. MENTZEL · DIPL.-ING. LUDEWIG**
Unterdörnen 114 · Postfach 20 02 10 · 5600 Wuppertal 2 · Fernruf (02 02) 55 70 22/23/24 · Telex 8 591 606 wpat

77                    – 9 –        5600 Wuppertal 2, den

Kennwort: "Wärmeisolierter Absperrhahn"

MANIBS R. Mannesmann GmbH + ibs Nagel GmbH & Co. KG,
Lempstraße 24, 5630 Remscheid-Bliedinghausen

---

B e z u g s z e i c h e n l i s t e :

---

| | | | |
|---|---|---|---|
| 10 | rohrförmiges Gehäuse | 31 | Dichtungsring |
| 11 | Absperrorgan | 32 | innere Mantelfläche |
| 12 | Ausnehmung in 11 | 33 | Stirnfläche von 31 |
| 13 | Drehachse | 34 | Ringschulter von 17 |
| 14 | Betätigungshandhabe | 35 | äußere Mantelfläche von 26 |
| 15 | Ausnehmungen in 10 | 36 | Isolierschicht |
| 16 | Ringscheibe | 37 | erweiterte Ausnehmung von 29 |
| 17 | Ringscheibe | 38 | metallische Hülse |
| 18 | Schweißnaht | 39 | Schweißnaht |
| 19 | Rohrstutzen an 16 | 40 | umlaufende Nut |
| 20 | Sprengring | 41 | Dichtungsring |
| 21 | Ausnehmung in 17 | 42 | Abdeckkappe |
| 22 | umlaufende Nut in 10 | 49 | Innengewinde |
| 23 | Nuten in 16, 17 | | |
| 24 | Dichtungsring | | |
| 25 | Durchbruch | | |
| 26 | Anschlußrohrstutzen | | |
| 27 | Ableitungsrohrteil | | |
| 28 | Schweißnaht | | |
| 29 | Verlängerung | | |
| 30 | Stirnfläche | | |

**PATENTANWÄLTE**
zugelassene Vertreter beim Europäischen Patentamt  **0209647**

**DIPL.-PHYS. BUSE · DIPL.-PHYS. MENTZEL · DIPL.-ING. LUDEWIG**
Unterdörnen 114 · Postfach 200210 · 5600 Wuppertal 2 · Fernruf (0202) 55 70 22/23/24 · Telex 8 591 606 wpat

77                    − 1 −                    5600 Wuppertal 2, den

Kennwort: "Wärmeisolierter Absperrhahn"

MANIBS R. Mannesmann GmbH + ibs Nagel GmbH & Co. KG,
Lempstraße 24, 5630 Remscheid-Bliedinghausen

---

A n s p r ü c h e :

---

1.) Absperrhahn für eine als Hausanschluß dienende
Druckrohrleitung, bestehend aus einem metallischen
Gehäuse (10), welches ein mit einer außerhalb des
Gehäuses (10) angeordneten Handhabe (14) betätigbares Absperrorgan (11) aufnimmt und beidendig
metallische Rohrstutzen (19, 26) für den Anschluß
der Zuleitung und der Ableitung aufweist, wobei
der eine der beiden Anschlußrohrstutzen (19, 26)
in einer einseitigen, rohrförmigen Verlängerung
(29) des Gehäuses (10) gehaltert und zwischen dem
metallischen Anschlußrohrstutzen (26) und der
metallischen Gehäuseverlängerung (29) eine zugleich
der Befestigung des Anschlußrohrstutzens (26) in
der Gehäuseverlängerung (29) dienende Zwischenlage
(36) aus elektrisch isolierendem Material vorgesehen ist,

d a d u r c h   g e k e n n z e i c h n e t ,

daß die Zwischenlage (36) aus elektrisch isolierendem
Material aus einer auf dem eingeschobenen Anschlußrohrstutzen (26) aufgesprühten Schicht aus Aluminiumoxid besteht, die mit Epoxydharz vakuumimprägniert ist.

2.) Absperrhahn nach Anspruch 1, dadurch gekennzeichnet, daß die auf den eingeschobenen Anschlußrohrstutzen (26) aufgesprühte und mit Epoxydharz vakuumimprägnierte Schicht (36) aus Aluminiumoxid eine Dicke von bis zu 2 mm aufweist.

3.) Absperrhahn nach Anspruch 1 oder 2, dadurch gekennzeichnet, daß die auf den eingeschobenen Anschlußrohrstutzen (26) aufgesprühte und mit Epoxydharz vakuumimprägnierte Schicht (36) aus Aluminiumoxid mit geschliffenen Anlageflächen (30, 35) versehen und der mit dieser Schicht (36) versehene Anschlußrohrstutzen (26) in der Gehäuseverlängerung (29) eingeschrumpft ist.

4.) Absperrhahn nach einem der Ansprüche 1 bis 3, dadurch gekennzeichnet, daß die innere Mantelfläche der Gehäuseverlängerung (38, 29), die mit Preßsitz auf der äußeren Mantelfläche (35) der Isolierschicht (36) aufsitzt und die die Isolierschicht (36) aufweisende äußere Mantelfläche (35) des Anschlußrohrstutzens (26) konisch zum Einsteckende des Anschlußrohrstutzens (26) zunehmen.

FIG. 1

MANIBS

FIG. 2

MANIBS

2/2

0209647

**0209647**

Nummer der Anmeldung

**Europäisches Patentamt**

# EUROPÄISCHER RECHERCHENBERICHT

| EINSCHLÄGIGE DOKUMENTE | | EP 86105667.9 |
|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | <u>DE - A1 - 3 134 205</u> (KLINGER AG)<br>* Gesamt *<br><br>---- | 1,3,4 | F 16 K 27/06<br>F 16 L 25/02 |

**RECHERCHIERTE SACHGEBIETE (Int. Cl.4)**

F 16 K  5/00

F 16 K 27/00

F 16 L 25/00

Der vorliegende Recherchenbericht wurde für alle Patentansprüche erstellt.

| Recherchenort | Abschlußdatum der Recherche | Prüfer |
|---|---|---|
| WIEN | 31-10-1986 | ROUSSARIAN |